# EUROPÄISCHE PATENTSCHRIFT

(11) **EP 3 280 901 B1**
(45) Veröffentlichungstag und Bekanntmachung des Hinweises auf die Patenterteilung: **08.05.2019**
(21) Anmeldenummer: 16711254.9
(22) Anmeldetag: 21.03.2016
(51) Int. Cl.: F02M 21/02

(54) **GASVENTIL**
GAS VALVE
SOUPAPE À GAZ

(30) Priorität: 08.04.2015 DE 102015206206
(43) Veröffentlichungstag der Anmeldung: 14.02.2018
(73) Patentinhaber: Robert Bosch GmbH, 70442 Stuttgart (DE)
(72) Erfinder: WESSNER, Jochen, 73728 Esslingen (DE); WIEDMANN, Felix, 70469 Stuttgart (DE)
(86) Internationale Anmeldenummer: PCT/EP2016/056093
(87) Internationale Veröffentlichungsnummer: WO 2016/162189

(56) Entgegenhaltungen:
- EP-A1- 1 872 007
- EP-A1- 2 626 543
- EP-A2- 0 870 916

## Beschreibung

Die Erfindung betrifft ein Gasventil zum Eindosieren eines gasförmigen Brennstoffs in einen Ansaugtrakt einer Verbrennungskraftmaschine mit den Merkmalen des Oberbegriffs des Anspruchs 1.

### Stand der Technik

Ein Gasventil der vorstehend genannten Art kann insbesondere zur Brennstoffversorgung von Gas- oder Gas-Diesel-Motoren in Personenkraft- oder Nutzfahrzeugen, in Schienenfahrzeugen und/oder auf Schiffen verwendet werden. Weitere mögliche Applikationen stellen Gas- oder Gas-Diesel-Motoren in Anlagen zur Energiegewinnung und/oder Energieerzeugung dar.

Aus der Offenlegungsschrift DE 103 53 011 A1 geht beispielhaft ein Gasventil hervor, das insbesondere für den Einsatz in einem Gasmotor ausgelegt ist und der Regelung eines Gasstroms von einer Zuströmseite zu einer Abströmseite dient. Das Gasventil weist ein Ventilgehäuse auf, in dem eine Betätigungseinheit für einen Magnetanker aufgenommen ist, der in dem Ventilgehäuse axial verschiebbar geführt ist. Der Magnetanker ist mit einem Ventilschließglied versehen, an dessen Stirnseite ein Dichtelement angeordnet ist, das derart mit einem an einer Sitzplatte ausgebildeten Ventilsitz zusammenwirkt, dass ein Gasstrom durch Abströmöffnungen der Sitzplatte steuerbar ist.

Aus der EP 1 872 007 A1 ist darüber hinaus ein Injektor für gasförmige Kraftstoffe bekannt mit einem beweglichen Magnetanker, der mit einem Ventilsitz zusammenwirkt und der flach ausgebildet ist.

Der vorliegenden Erfindung liegt die Aufgabe zugrunde, ein Gasventil anzugeben, das besonders kompaktbauend ist, eine hohe Stelldynamik besitzt und zugleich energetisch effizient arbeitet.

Zur Lösung der Aufgabe wird das Gasventil mit den Merkmalen des Anspruchs 1 vorgeschlagen. Vorteilhafte Weiterbildungen der Erfindung sind den Unteransprüchen zu entnehmen.

### Offenbarung der Erfindung

Das zum Eindosieren eines gasförmigen Brennstoffs in einen Ansaugtrakt einer Verbrennungskraftmaschine vorgeschlagene Gasventil umfasst einen Elektromagneten und einen mit dem Elektromagneten zusammenwirkenden hubbeweglichen Anker, der in Richtung eines Ventilsitzelements, das einen Ventilsitz ausbildet, von der Federkraft einer Schließfeder beaufschlagt ist. Erfindungsgemäß ist der Anker als Flachanker ausgebildet und besitzt einen plattenförmigen Abschnitt, der einerseits eine mit dem Elektromagneten zusammenwirkende Polfläche und andererseits eine mit dem Ventilsitz zusammenwirkende Dichtfläche aufweist. Das heißt, dass der Anker zugleich ein mit dem Ventilsitz zusammenwirkendes Ventilschließelement ausbildet, so dass ein separates Ventilschließelement entfallen kann. Durch den Verzicht auf ein separates Ventilschlie-ßelement wird der Aufbau des Gasventils vereinfacht. Ferner kann das Gasventil kompaktbauender gestaltet werden. Dies gilt insbesondere, wenn - wie vorgeschlagen - der Anker als Flachanker ausgebildet ist und sich Polfläche und Dichtfläche am plattenförmigen Abschnitt gegenüber liegen. Auf diese Weise wird ein Gasventil geschaffen, das - zumindest in axialer Richtung - besonders kompaktbauend ist.

Die geringe Bauhöhe des vorgeschlagenen Gasventils geht darüber hinaus mit einer Reduzierung der zu bewegenden Masse einher. Hieraus folgt wiederum, dass die Schaltdynamik steigt und/oder der Energiebedarf sinkt.

Erfindungsgemäß ist im plattenförmigen Abschnitt des Ankers mindestens eine radial und/oder schräg verlaufende Zuströmbohrung für das Gas ausgebildet. Durch die mindestens eine Zuströmbohrung wird die zu bewegende Masse weiter reduziert. Ferner kann zumindest eine Teilmenge des zuströmenden Gases über die mindestens eine Zuströmbohrung von radial außen nach radial innen oder umgekehrt geführt werden, so dass die Anströmung des im Ventilsitzelement ausgebildeten Ventilsitzes optimiert wird.

Vorteilhafterweise mündet die Zuströmbohrung in eine axial verlaufende Bohrung oder in eine Ringnut des plattenförmigen Abschnitts. Bohrung oder Ringnut sind dabei bevorzugt radial innen in Bezug auf den Ventilsitz angeordnet. Auf diese Weise wird ein Strömungspfad geschaffen, der den Ventilsitz bei geschlossenem Gasventil umgeht und bei geöffnetem Gasventil eine Anströmung des Ventilsitzes sowohl von radial au-ßen als auch von radial innen ermöglicht.

Da die Zuströmbohrung in Verbindung mit einer axial verlaufenden weiteren Bohrung und/oder einer Ringnut die Masse des Ankers weiter reduziert, wird ferner vorgeschlagen, dass mehrere solcher radial und/oder schräg verlaufenden Zuströmbohrungen im plattenförmigen Abschnitt des Ankers vorgesehen sind. Auf diese Weise kann die Dynamik weiter gesteigert werden. Bevorzugt sind die mehreren Zuströmbohrungen in gleichem Winkelabstand zueinander angeordnet, wobei weiterhin bevorzugt jede Zuströmbohrung in eine axial verlaufende Bohrung mündet. Alternativ kann vorgesehen sein, dass alle Zuströmbohrungen in eine gemeinsame Ringnut münden. Beide Ausgestaltungen weisen den Vorteil auf, dass eine gleichmäßige Verteilung des einzudosierenden Gases innerhalb des Gasventils erreicht, wird.

In Weiterbildung der Erfindung wird vorgeschlagen, dass der Anker über das Ventilsitzelement hubbeweglich geführt ist. Die Führung wirkt einem Verkippen des Ankers entgegen, so dass das Ventil sicher schließt. Ferner wird die Schaltdynamik weiter verbessert. Die Führung wird vorzugsweise über eine im Anker oder im Ventilsitzelement ausgebildete zentrale Führungsbohrung und einem hierin aufgenommenen Führungszapfen des jeweils anderen Bauteils bewirkt. Idealerweise ist die Führungsbohrung im hubbeweglichen Bauteil, d. h. im Anker, ausgebildet. Denn durch die Führungsbohrung wird die zu bewegende Masse weiter minimiert.

Vorteilhafterweise umfasst der Anker zur Ausbildung der mit dem Ventilsitz zusammenwirkenden Dichtfläche mindestens ein Dichtelement. Das Dichtelement kann aus einem anderen Werkstoff als der Anker bestehen, so dass eine funktionsgerechte Materialwahl möglich ist. Um die Dichtwirkung zu erhöhen, ist vorzugsweise das Dichtelement zumindest teilweise aus einem Elastomer gefertigt.

Des Weiteren bevorzugt ist das Dichtelement ringförmig ausgebildet. In diesem Fall ist vorzugsweise auch der mit dem Dichtelement zusammenwirkende Ventilsitz ringförmig gestaltet.

Alternativ oder ergänzend wird vorgeschlagen, dass das Dichtelement in den plattenförmigen Abschnitt des Ankers eingesetzt ist. Zur Aufnahme des Dichtelements kann in einer dem Ventilsitz zugewandten Oberfläche des plattenförmigen Abschnitts eine Ringnut ausgebildet sein. Die Integration des Dichtelements in den Anker erlaubt eine weitere Reduzierung der Bauhöhe des Ankers bzw. des Gasventils.

Die geringe Bauhöhe des Ankers hat zur Folge, dass auf den Anker wirkende Kippmomente sehr klein sind. Dies gilt insbesondere, wenn die mit dem Ventilsitz zusammenwirkende Dichtfläche des Ankers bzw. des hierin eingesetzten Dichtelements auf der Höhe der Führung des Ankers zu liegen kommt.

Des Weiteren wird vorgeschlagen, dass der Anker eine zum Elektromagneten hin offene Ringnut besitzt. Durch die Ringnut wird die Masse des Ventilschließelements weiter verringert. Ferner kann die Ringnut zur zumindest bereichsweisen Aufnahme der Schließfeder genutzt werden. Die Schließfeder ist in diesem Fall über den Anker abgestützt und geführt.

An ihrem dem Anker abgewandten Ende ist die Schließfeder bevorzugt unmittelbar am Elektromagneten abgestützt. Diese Ausführungsform ist besonders einfach herstellbar. Alternativ wird vorgeschlagen, dass die Schließfeder mittelbar über eine Einstellscheibe am Elektromagneten abgestützt ist. Die Einstellscheibe dient der Einstellung der Federvorspannung. Ferner kann sie zur Ausbildung eines Hubanschlags genutzt werden.

Denn gemäß einer weiteren bevorzugten Ausführungsform der Erfindung bildet der Elektromagnet und/oder die Einstellscheibe mindestens eine als Hubanschlag dienende Anschlagfläche aus. Die Ausbildung der als Hubanschlag dienenden Anschlagfläche an der Einstellscheibe besitzt den Vorteil, dass die Einstellscheibe zugleich eine Einstellung des Hubs des Ventilschließelements ermöglicht. Die Anschlagfläche kann dabei sowohl radial außen liegend als auch radial innen liegend in Bezug auf die Schließfeder angeordnet sein.

Vorteilhafterweise ist mindestens eine Anschlagfläche mit einer Beschichtung versehen, die vorzugsweise ein Elastomer umfasst. Die Beschichtung, insbesondere wenn sie aus einem Elastomer besteht, besitzt eine dämpfende Wirkung und verringert auf diese Weise die Gefahr von Prellern, wenn der Anker auf die Anschlagfläche auftrifft. Denn das Elastomer ist in der Lage, Bewegungsenergie aufzunehmen.

Eine bevorzugte Ausführungsform der Erfindung wird nachfolgend anhand der beigefügten Zeichnungen näher erläutert. Diese zeigen:
Fig. 1 einen schematischen Längsschnitt durch ein erfindungsgemäßes Ventil gemäß einer bevorzugten Ausführungsform und
Fig. 2 vergrößerten Ausschnitt der Fig. 1 im Bereich des Ventilschließelements und des Ventilsitzelements.

### Ausführliche Beschreibung der Zeichnungen

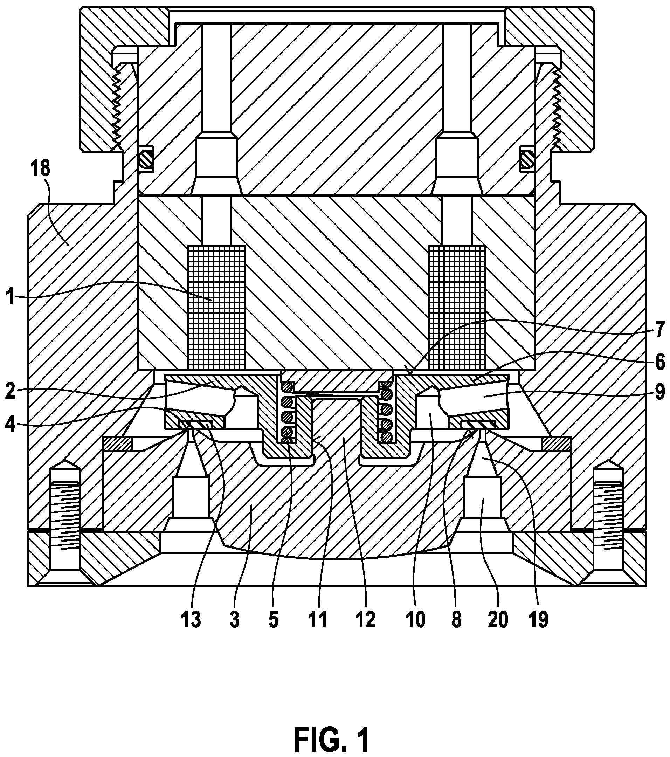

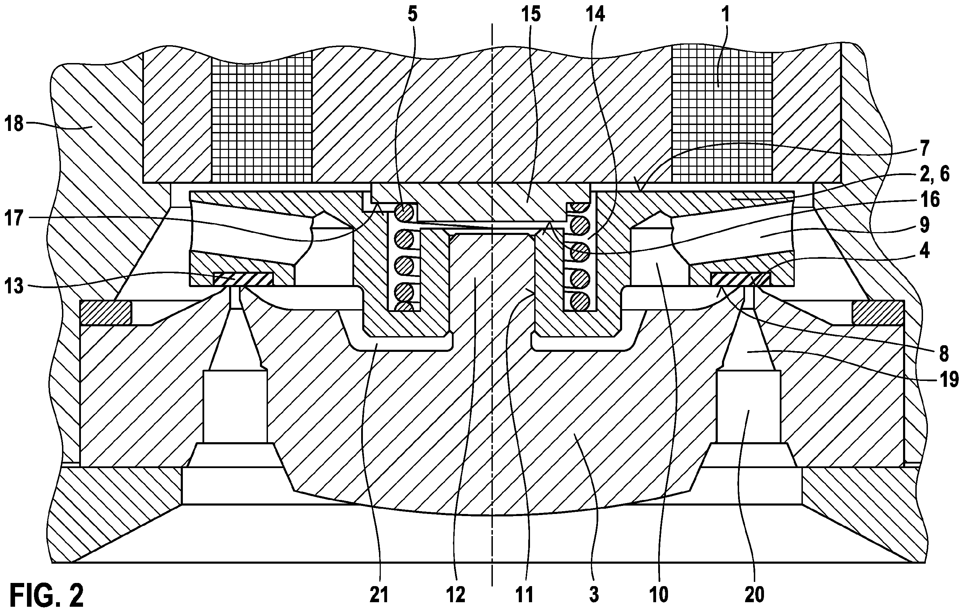

Das in den Fig. 1 und 2 dargestellte Gasventil umfasst ein Ventilgehäuse 18, in dem ein Elektromagnet 1 zur Einwirkung auf einen hubbeweglichen Anker 2 aufgenommen ist. Der Anker 2 ist als Flachanker ausgebildet und besitzt einen plattenförmigen Abschnitt 6, der zugleich ein Ventilschließelement ausbildet. Das dargestellte Gasventil ist somit vergleichsweise kompaktbauend.

Der Anker 2 wirkt mit einem Ventilsitz 4 eines Ventilsitzelements 3 zusammen, das ebenfalls im Ventilgehäuse 18 aufgenommen ist. Zur Ausbildung des Ventilsitzes 4 weist das Ventilsitzelement 3 auf seiner dem Anker 2 zugewandten Seite eine in der Draufsicht ringförmige und im Querschnitt konisch geformte Erhöhung auf, die von einer Ausnehmung 19 durchsetzt ist. In die Ausnehmung 19 münden axial verlaufende Durchströmöffnungen 20 für das einzudosierende Gas.

Zur Erhöhung der Dichtwirkung ist in den plattenförmigen Abschnitt 6 des Ankers 2 ein ringförmiges Dichtelement 13 eingelassen, dass eine mit dem Ventilsitz 4 zusammenwirkende Dichtfläche 8 besitzt.

Die dem Ventilsitz 4 abgewandte Oberfläche des plattenförmigen Abschnitts 6 des Ankers 2 bildet eine mit dem Elektromagneten 1 zusammenwirkende Polfläche 7 aus.

Da die Dichtfläche 8 und die Polfläche 7 am selben Bauteil bzw. Bauteilabschnitt ausgebildet sind, wird eine besonders kompaktbauende Anordnung erreicht. Die Dichtfläche 8 kommt zudem auf der Höhe einer zentral im Anker 2 ausgebildeten Führungsbohrung 11 zu liegen, in der ein Führungszapfen 12 des Ventilsitzelements 3 aufgenommen ist. Dadurch können auf den Anker 2 wirkende Kippmomente minimal gehalten werden. Die Führungsbohrung 11 führt darüber hinaus zu einer Reduzierung der Ankermasse, so dass dessen Dynamik steigt.

Konzentrisch zur Führungsbohrung 11 ist im Anker 2 eine Ringnut 14 zur Aufnahme einer Schließfeder 5 ausgebildet, deren Federkraft den Anker 2 in Richtung des Ventilsitzes 4 beaufschlagt. Durch die Ringnut 14 ist die Schließfeder 5 geführt bzw. lagefixiert. Ferner wird durch die Ringnut 14 die Masse des Ankers 2 weiter reduziert. Andernends ist die Schließfeder 5 an einer Einstellscheibe 15 abgestützt, die wiederum am Elektromagneten 1 abgestützt ist. Die Einstellscheibe 15 dient der Einstellung der Federvorspannkraft der Schließfeder 5. Darüber hinaus kann - wie vorliegend der Fall - die Einstellscheibe 15 zur Ausbildung eines Hubanschlags für den Anker 2 genutzt werden. An der Einstellscheibe 15 kann hierzu eine Anschlagfläche 16 ausgebildet sein, die radial innen in Bezug auf die Schließfeder 5 angeordnet ist und mit einer die Führungsbohrung 11 begrenzenden Stirnfläche des Ankers 2 zusammenwirkt (siehe rechte Bildhälfte der Fig. 2). Alternativ kann die Einstellscheibe 15 eine Anschlagfläche 17 ausbilden, die radial außen in Bezug auf die Schließfeder 5 angeordnet ist (siehe linke Bildhälfte der Fig. 2). Der Durchmesser der Einstellscheibe 15 ist in diesem Fall entsprechend größer zu wählen.

Das in den Fig. 1 und 2 dargestellte Gasventil ist als stromlos geschlossenes Ventil ausgeführt. Um das Ventil zu öffnen muss der Elektromagnet 1 bestromt werden, so dass ein Magnetfeld aufgebaut wird, dessen Magnetkraft den Anker 2 nach oben zieht. Dabei hebt der Anker 2 vom Ventilsitz 4 ab und gibt die ringförmige Ausnehmung 19 bzw. die Durchströmöffnungen 20 frei.

Bei geöffnetem Ventil wird der Ventilsitz 4 sowohl von radial außen als auch von radial innen angeströmt. Um dies zu ermöglichen, sind im plattenförmigen Abschnitt 6 des Ankers 2 im Wesentlichen radial verlaufende Zuströmbohrungen 9 ausgebildet, die in axial verlaufende Bohrungen 10 münden, die jenseits des Ventilsitzes 4 in einen Ventilraum 21 münden. Auf diese Weise wird eine Umgehung des Ventilsitzes 4 bei geschlossenem Ventil geschaffen, die eine gleichmäßige Verteilung des Gases bis in den Ventilraum 21 hinein gewährleistet.

Zum Schließen des Ventils wird die Bestromung des Elektromagneten 1 beendet, so dass die Federkraft der Schließfeder 5 den Anker 2 zurückstellt. Dabei kommt das in den Anker 2 eingelassene ringförmige Dichtelement 13 zur Anlage am Ventilsitz 4 und dichtet die ringförmige Ausnehmung 19 ab.

## Patentansprüche

1. Gasventil zum Eindosieren eines gasförmigen Brennstoffs in einen Ansaugtrakt einer Verbrennungskraftmaschine, umfassend einen Elektromagneten (1) und einen mit dem Elektromagneten (1) zusammenwirkenden hubbeweglichen Anker (2), der in Richtung eines Ventilsitzelements (3), das einen Ventilsitz (4) ausbildet, von der Federkraft einer Schließfeder (5) beaufschlagt ist, wobei der Anker (2) als Flachanker ausgebildet ist und einen plattenförmigen Abschnitt (6) besitzt, der einerseits eine mit dem Elektromagneten (1) zusammenwirkende Polfläche (7) und andererseits eine mit dem Ventilsitz (4) zusammenwirkende Dichtfläche (8) aufweist,
**dadurch gekennzeichnet,**
**dass** im plattenförmigen Abschnitt (6) des Ankers (2) mindestens eine radial und/oder schräg verlaufende Zuströmbohrung (9) für das Gas ausgebildet ist.

2. Gasventil nach Anspruch 1,
**dadurch gekennzeichnet, dass** die Zuströmbohrung (9) in eine axial verlaufende Bohrung (10) oder in eine Ringnut des plattenförmigen Abschnitts (6) mündet, wobei vorzugsweise die Bohrung (10) oder die Ringnut radial innen in Bezug auf den Ventilsitz (4) angeordnet ist.

3. Gasventil nach einem der vorhergehenden Ansprüche,
**dadurch gekennzeichnet, dass** der Anker (2) über das Ventilsitzelement (3) hubbeweglich geführt ist, wobei vorzugsweise die Führung über eine im Anker (2) oder im Ventilsitzelement (3) ausgebildete zentrale Führungsbohrung (11) und einem hierin aufgenommenen Führungszapfen (12) des jeweils anderen Bauteils bewirkt wird.

4. Gasventil nach einem der vorhergehenden Ansprüche,
**dadurch gekennzeichnet, dass** der Anker (2) zur Ausbildung der mit dem Ventilsitz (4) zusammenwirkenden Dichtfläche (8) mindestens ein Dichtelement (13) umfasst, das vorzugsweise ringförmig ausgebildet und/oder in den plattenförmigen Abschnitt (6) des Ankers (2) eingesetzt ist.

5. Gasventil nach einem der vorhergehenden Ansprüche,
**dadurch gekennzeichnet, dass** der Anker (2) eine zum Elektromagneten (1) hin offene Ringnut (14) zur zumindest bereichsweisen Aufnahme der Schließfeder (5) besitzt.

6. Gasventil nach einem der vorhergehenden Ansprüche,
**dadurch gekennzeichnet, dass** die Schließfeder (5) an ihrem dem Anker (2) abgewandten Ende unmittelbar oder mittelbar über eine Einstellscheibe (15) am Elektromagneten (1) abgestützt ist.

7. Gasventil nach einem der vorhergehenden Ansprüche,
**dadurch gekennzeichnet, dass** der Elektromagnet (1) und/oder die Einstellscheibe (15) mindestens eine als Hubanschlag dienende Anschlagfläche (16, 17) ausbilden.

8. Gasventil nach Anspruch 7,
**dadurch gekennzeichnet, dass** mindestens eine Anschlagfläche (16, 17) mit einer Beschichtung versehen ist, die vorzugsweise ein Elastomer umfasst.

## Claims

1. Gas valve for metering a gaseous fuel into an intake section of an internal combustion engine, comprising an electromagnet (1) and an armature (2) which interacts with the electromagnet (1), can be moved in a reciprocating movement and is loaded by the spring force of a closing spring (5) in the direction of a valve seat element (3) which configures a valve seat (4), the armature (2) being configured as a flat armature and having a plate-shaped section (6) which has, on one side, a pole face (7) which interacts with the electromagnet (1) and, on the other side, a sealing face (8) which interacts with the valve seat (4), **characterized in that** at least one radially and/or obliquely running inflow bore (9) for the gas is configured in the plate-shaped section (6) of the armature (2).

2. Gas valve according to Claim 1, **characterized in that** the inflow bore (9) opens into an axially running bore (10) or into an annular groove of the plate-shaped section (6), the bore (10) or the annular groove preferably being arranged radially on the inside in relation to the valve seat (4).

3. Gas valve according to either of the preceding claims, **characterized in that** the armature (2) is guided such that it can be moved with a reciprocating movement via the valve seat element (3), the guidance preferably being brought about via a central guide bore (11) which is configured in the armature (2) or in the valve seat element (3), and a guide pin (12) of the respective other component, which guide pin (12) is received in the said central guide bore (11).

4. Gas valve according to one of the preceding claims, **characterized in that**, in order to configure the sealing face (8) which interacts with the valve seat (4), the armature (2) comprises at least one sealing element (13) which is preferably of annular configuration and/or is inserted into the plate-shaped section (6) of the armature (2).

5. Gas valve according to one of the preceding claims, **characterized in that** the armature (2) has an annular groove (14) which is open towards the electromagnet (1) for receiving the closing spring (5) at least in regions.

6. Gas valve according to one of the preceding claims, **characterized in that**, at its end which faces away from the armature (2), the closing spring (5) is supported on the electromagnet (1) directly or indirectly via an adjustment disc (15).

7. Gas valve according to one of the preceding claims, **characterized in that** the electromagnet (1) and/or the adjustment disc (15) configure/configures at least one stop face (16, 17) which serves as a stroke stop.

8. Gas valve according to Claim 7, **characterized in that** at least one stop face (16, 17) is provided with a coating which preferably comprises an elastomer.

## Revendications

1. Soupape à gaz pour le dosage d'un carburant gazeux dans une ligne d'admission d'un moteur à combustion interne, comprenant un électroaimant (1) et une armature (2) déplaçable avec une course et coopérant avec l'électroaimant (1), qui est sollicitée par la force de ressort d'un ressort de fermeture (5) dans la direction d'un élément de siège de soupape (3) qui constitue un siège de soupape (4), l'armature (2) étant réalisée sous forme d'armature plate et possédant une portion en forme de plaque (6) qui présente d'une part une surface polaire (7) coopérant avec l'électroaimant (1) et d'autre part une surface d'étanchéité (8) coopérant avec le siège de soupape (4),
**caractérisée en ce**
**qu'**au moins un alésage d'alimentation (9) pour le gaz, s'étendant radialement et/ou obliquement, est réalisé dans la portion en forme de plaque (6) de l'armature (2).

2. Soupape à gaz selon la revendication 1, **caractérisée en ce que** l'alésage d'alimentation (9) débouche dans un alésage (10) s'étendant axialement ou dans une rainure annulaire de la portion en forme de plaque (6), l'alésage (10) ou la rainure annulaire étant de préférence disposé(e) radialement à l'intérieur par rapport au siège de soupape (4).

3. Soupape à gaz selon l'une quelconque des revendications précédentes,
**caractérisée en ce que** l'armature (2) est guidée de manière déplaçable avec une course par le biais de l'élément de siège de soupape (3), le guidage étant effectué de préférence par le biais d'un alésage de guidage central (11) réalisé dans l'armature (2) ou dans l'élément de siège de soupape (3) et d'un tourillon de guidage (12) de l'autre composant respectif, reçu dans l'alésage de guidage.

4. Soupape à gaz selon l'une quelconque des revendications précédentes,
**caractérisée en ce que** l'armature (2) présente au moins un élément d'étanchéité (13) pour réaliser la surface d'étanchéité (8) coopérant avec le siège de soupape (4), lequel est réalisé de préférence sous forme annulaire et/ou est inséré dans la portion en forme de plaque (6) de l'armature (2).

5. Soupape à gaz selon l'une quelconque des revendications précédentes,
**caractérisée en ce que** l'armature (2) possède une rainure annulaire (14) ouverte vers l'électroaimant (1) pour recevoir au moins en partie le ressort de fermeture (5).

6. Soupape à gaz selon l'une quelconque des revendications précédentes,
**caractérisée en ce que** le ressort de fermeture (5) est supporté sur l'électroaimant (1) de manière directe ou indirecte au niveau de son extrémité opposée à l'armature (2), par le biais d'une rondelle de réglage (15).

7. Soupape à gaz selon l'une quelconque des revendications précédentes,
**caractérisée en ce que** l'électroaimant (1) et/ou la rondelle de réglage (15) constituent au moins une surface de butée (16, 17) servant de butée de fin de course.

8. Soupape à gaz selon la revendication 7, **caractérisée en ce qu'**au moins une surface de butée (16, 17) est pourvue d'un revêtement qui comprend de préférence un élastomère.
